# EUROPEAN PATENT APPLICATION

(11) **EP 3 176 985 A1**
(43) Date of publication of application: **07.06.2017**
(21) Application number: 15827406.8
(22) Date of filing: 30.07.2015
(51) Int. Cl.: H04L 12/70, H04L 12/723, H04W 28/00, H04W 80/04

(54) **CONTROL DEVICE AND CONTROL METHOD**

(30) Priority: 01.08.2014 JP 2014157368
(71) Applicant: NEC Corporation, Tokyo 108-8001 (JP)
(72) Inventor: OGURA, Daisuke, Tokyo 108-8001 (JP)
(74) Representative: MacDougall, Alan John Shaw
(86) International application number: PCT/JP2015/003857
(87) International publication number: WO 2016/017182

(57) **Abstract**

In order to provide a control device capable of providing detailed services, a control device 30 includes: a storage unit 33 configured to store correspondence information in which each of a plurality of identifiers for identifying a corresponding one of a plurality of virtual networks at a network layer level is associated with an attribute value of data to be transmitted by the virtual network identified by the identifier; and a control unit 34 configured to assign, based on the correspondence information, the identifier and a policy for use of the virtual network identified by the identifier to each of a plurality of communication devices connected via a physical network.

## Description

### Technical Field

The present disclosure relates to a control device for controlling a virtual network and a control method.

### Background Art

In a field of communication, a technology for establishing a virtual network called VLAN (Virtual Local Area Network) is widely used. A physical network can be divided by using VLAN and a plurality of virtual networks can be established at an L2 (Layer 2) level. For example, in patent literature 1, there is disclosed a technology in which business offices of a company are connected by VLAN.

Further, in the field of mobile communication, new technology and service are being developed. In recent years, for example, a mobile network operator called MVNO (Mobile Virtual Network Operator) is established. The MVNO is a business operator which borrows the mobile communication network owned by another company and provides a service. When the business operator owning the mobile communication network lends the communication network to another business operator, various types of data used by the user of the business operator are transmitted and received in this communication network.

Further, virtualization of a base station device is also proposed. In the virtualization of the base station, a plurality of servers cooperate with each other and whereby, the function of the base station device is virtually realized. When such technology is used and the function of the base station device is realized by one device, data transmitted only inside the base station device is transmitted through a communication network. However, because a degree of priority used in the base station device is assigned to such data, various types of data to which the degree of priority is assigned are transmitted through the communication network.

### Citation List

### Patent Literature

PTL 1: Japanese Patent Application Laid-Open No. 2014-014051

### Summary of Invention

### Technical Problem

By applying VLAN described in patent literature 1 to the virtualization of the MVNO or the base station, the data of each business operator in the MVNO and a plurality of types of data originally transmitted inside the base station device can be distinguished at an L2 level. However, by VLAN technology, the transmitted data cannot be distinguished at an L3 (Layer 3) level. Therefore, when applying VLAN to the MVNO, the communication device only performs the same process to data of the user of all communication providers and cannot provide a sensitive service. Further, when applying VLAN to the virtualization of the base station, the communication device only performs the same process to a plurality of data having different priority levels and cannot provide a sensitive service.

An object of the exemplary embodiment is to provide a control device which can provide a sensitive service and a control method.

### Solution to Problem

A control device according to the exemplary embodiment includes
a storage unit which stores correspondence information in which each of a plurality of identifiers which identify each of a plurality of virtual networks at a network layer level is associated with an attribute value of data transmitted by the virtual network identified by the identifier and
a control unit which assigns the identifier and a policy for the use of the virtual network identified by the identifier to each of a plurality of communication devices connected through a physical network based on the correspondence information.

Further, a control method according to the exemplary embodiment comprises:
reading out correspondence information from a storage unit which stores the correspondence information in which each of a plurality of identifiers which identify each of a plurality of virtual networks at a network layer level is associated with an attribute value of data transmitted by the virtual network identified by the identifier and
assigning the identifier and a policy for the use of the virtual network identified by the identifier to each of a plurality of communication devices connected through a physical network based on the correspondence information read out from the storage unit.

### Advantageous Effects of Invention

By using the exemplary embodiment, a sensitive service can be provided.

### Brief Description of Drawings

[Fig. 1] Fig. 1 is a figure showing a configuration of a mobile communication system 1 according to a first exemplary embodiment.
[Fig. 2] Fig. 2 is a block diagram showing a configuration of a control device 30.
[Fig. 3] Fig. 3 is a figure showing an example of first correspondence information.
[Fig. 4] Fig. 4 is a figure showing a configuration of a mobile communication system 2 according to a second exemplary embodiment.
[Fig. 5] Fig. 5 is a figure showing an example of second correspondence information.
[Fig. 6] Fig. 6 is a figure showing a configuration of a mobile communication system 3 according to a third exemplary embodiment.
[Fig. 7] Fig. 7 is a figure showing an example of third correspondence information.
[Fig. 8] Fig. 8 is a figure showing an example of fourth correspondence information.
[Fig. 9] Fig. 9 is a figure showing an example of fifth correspondence information.

### Description of Embodiments

An exemplary embodiment will be described below with reference to an accompanying drawing. Further, the same reference numbers are used for the elements having the same function in the description and the drawing and the overlap description may be omitted.

### (First exemplary embodiment)

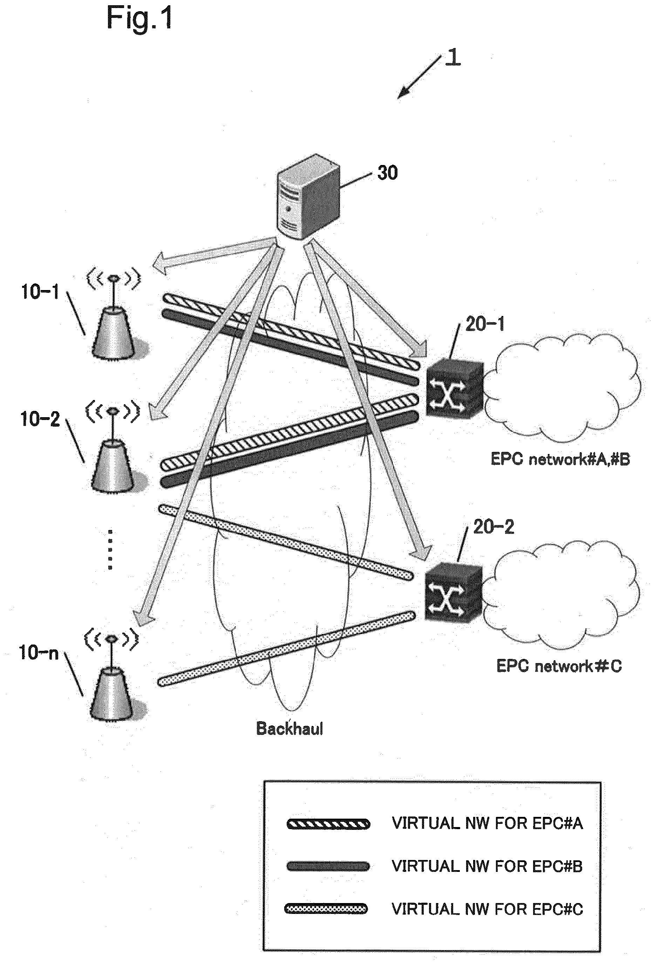

Fig. 1 is a figure showing a configuration of a mobile communication system 1 according to a first exemplary embodiment. The mobile communication system 1 includes a plurality of base station devices 10-1 to 10-n, L3 (Layer 3) switches 20-1 and 20-2, and a control device 30.

The base station devices 10-1 to 10-n are communication devices which communicate with a mobile station such as a portable telephone.

Each of the base station devices 10-1 to 10-n includes an antenna unit which communicates with the mobile station and a communication interface which is connected to a backhaul line. Further, each of the base station devices 10-1 to 10-n and the base station devices 10-1 to 10-n is connected to the L3 switches 20-1 and 20-2 via the backhaul line that is a physical network. Further, in particular, when the base station devices 10-1 to 10-n are not required to be distinguished from each other, it is just called the base station device 10.

The L3 switches 20-1 and 20-2 are communication devices which relay communication between the backhaul line and EPC (Evolved Packet Core) networks A to C. Each of the EPC networks A to C is a core line provided by an operator. Further, in particular, when the L3 switches 20-1 and 20-2 are not required to be distinguished from each other, it is just called the L3 switch 20.

The control device 30 assigns a VNI (VxLAN Network Identifier) that is an identifier for identifying the virtual network and a policy for the use of the virtual network identified by the VNI to the base station devices 10-1 to 10-n and the L3 switches 20-1 and 20-2 that are the communication devices connected to the backhaul line by using a function of VxLAN (Virtual eXtensible Local Area Network). The control device 30 assigns the VNI and the policy to each communication device and thereby, establishes a plurality of virtual networks on the backhaul line.

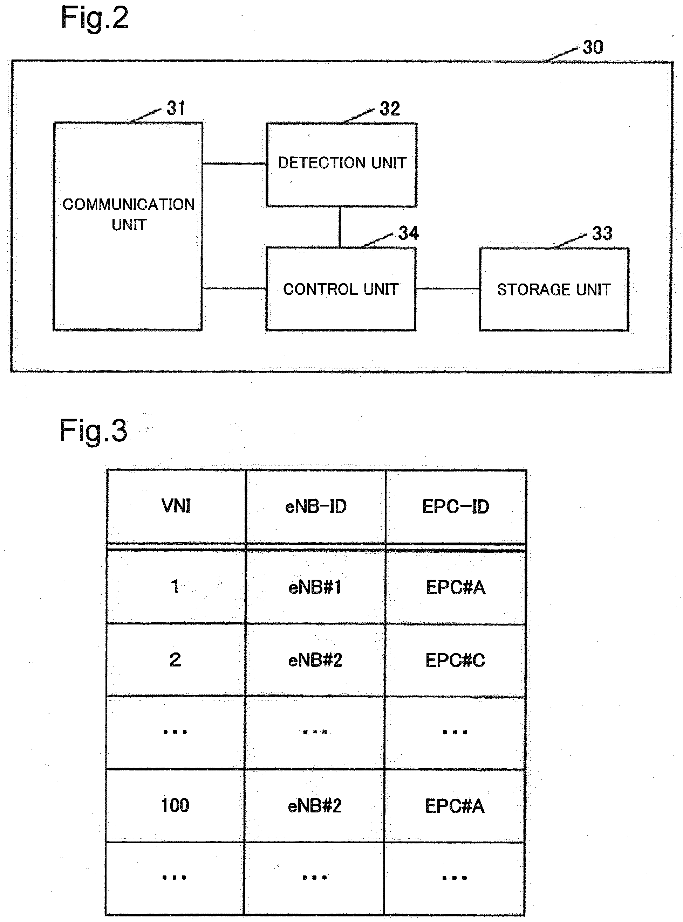

Fig. 2 is a block diagram showing a detailed configuration of the control device 30.

The control device 30 includes a communication unit 31, a detection unit 32, a storage unit 33, and a control unit 34.

The communication unit 31 connects the base station devices 10-1 to 10-n and each of the L3 switches 20-1 and 20-2 via the backhaul line.

The detection unit 32 detects a communication state of the backhaul line via the communication unit 31.

In the storage unit 33, the VNI that is the identifier for identifying each of a plurality of the virtual networks and the attribute value of the data transmitted by the virtual network identified by the VNI are associated with each other.

Fig. 3 is a figure showing an example of the correspondence information used by the control device 30.

In first correspondence information shown in Fig. 3, the VNI value is associated with information indicating a transmission source of the data and a destination as information indicating the attribute value of the data. The information indicating the transmission source of the data and the destination includes an eNB(evolved Node B)-ID(Identifier) for identifying the base station and an EPC-ID for identifying the EPC.

The control unit 34 makes the storage unit 33 store the first correspondence information and reads out the first correspondence information from the storage unit 33. The control unit 34 assigns the VNI and the policy for the use of the VNI to each of a plurality of the communication devices connected through a physical network such as the base station devices 10-1 to 10-n, the L3 switches 20-1 and 20-2, and the like based on this first correspondence information. As a result, a plurality of virtual networks are established between the base station devices 10-1 to 10-n and the L3 switches 20-1 and 20-2 for each attribute value of the data. Accordingly, each communication device can distinguish the data for each attribute value of the data. When the data can be distinguished for each attribute value of the data, each communication device can perform a process different for each attribute value of the data to each data and thereby, can provide the sensitive service.

When the VNI and the policy are assigned based on the first correspondence information, the virtual network different for each EPC network is established. Because each operator uses the different EPC network, the data is transmitted by the virtual network different for each operator. Accordingly, even when a plurality of operators exist in the mobile communication system 1, the base station devices 10-1 to 10-n can distinguish the operator by which the data transmitted and received by the user should be relayed.

More specifically, the policy assigned to the base station device 10-2 identified by an abbreviation of eNB#2 includes the following policies a) and b).
a) When the destination address is a network identified by an abbreviation of EPC#C, the virtual network identified by the VNI value of 2 is used.
b) When the destination address is a network identified by an abbreviation of EPC#A, the virtual network identified by the VNI value of 100 is used.

Further, all the first correspondence information shown in Fig. 3 are assigned to the L3 switches 20-1 and 20-2 as the policy. As a result, the L3 switches 20-1 and 20-2 can distinguish the transmission source of the data and the destination by referring to the VNI value of the data that is received.

Further, the control unit 34 performs a route control of the virtual network based on the communication state detected by the detection unit 32. Specifically, the control unit 34 changes a degree of priority of each virtual network based on the communication state. Further, the control unit 34 reassigns the VNI based on the communication state and changes the network configuration. By this process, the resource assigned to each virtual network is changed.

As described above, in the first exemplary embodiment, the control device 30 includes the storage unit 33 and the control unit 34. The storage unit 33 stores the correspondence information in which each of the VNIs that are a plurality of the identifiers for identifying each of a plurality of the virtual networks at the network layer level is associated with the EPC-ID for identifying a destination network that is the attribute value of the data transmitted by the virtual network identified by the VNI. The control unit 34 assigns the VNI and the policy for the use of the virtual network identified by the VNI to each of a plurality of the communication devices connected by the backhaul line that is a physical network based on the correspondence information. By these configurations, the virtual network different for each attribute value of the data is established between the communication devices. Accordingly, each communication device can distinguish the data for each attribute value of the data. Because the EPC-ID is different for each communication provider, each communication device can distinguish the data which is transmitted by the user and processed by the communication provider and thereby, can provide the sensitive service.

Further, in the above-mentioned embodiment, the control device 30 further includes the detection unit 32 for detecting the state of each virtual network. The control unit 34 performs the route control of each virtual network based on the state detected by the detection unit 32. By this configuration, the route control is performed for each attribute value of the data. Therefore, each communication device can more finely perform the route control for each attribute value of the data. As a result, each communication device can provide a more sensitive service.

Further, in the above-mentioned exemplary embodiment, the correspondence information includes information indicating at least one of the destination of the data and the transmission source as the attribute value of the data. By this structure, the virtual network is established between the communication devices for each of at least one of the destination of the data and the transmission source. Accordingly, each communication device can distinguish the data for each destination of the data or each transmission source. Therefore, each communication device can more certainly provide the sensitive service.

### (Second exemplary embodiment)

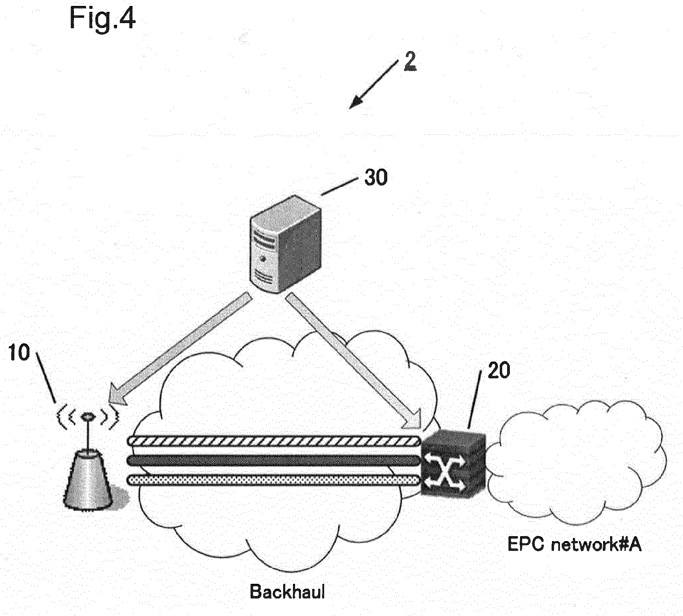

Fig. 4 is a figure showing a configuration of a mobile communication system 2 according to a second exemplary embodiment.

The mobile communication system 2 includes the base station device 10, the L3 switch 20, and the control device 30. In the second exemplary embodiment, the correspondence information used by the control unit 30 is different from that used by the control unit 30 in the first exemplary embodiment. The mobile communication system 2 may include a plurality of the base station devices and a plurality of the L3 switches like the mobile communication system 1 shown in Fig. 1. For ease of explanation, in Fig. 4, one base station device 10 and one L3 switch 20 are shown.

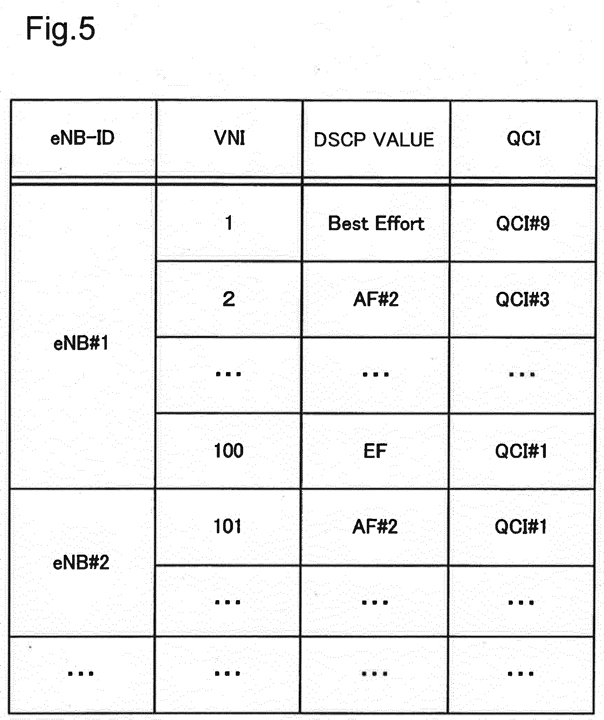

Fig. 5 is a figure showing an example of the correspondence information used by the control unit 30 in this exemplary embodiment.

In second correspondence information shown in Fig. 5, the VNI value and the attribute value of data are associated with each other.

Specifically, the second correspondence information includes an eNB-ID and information indicating a service type of data as the attribute value of the data. The information indicating the service type is for example, information indicating a degree of priority of the data. The information indicating the degree of priority of the data is a DSCP (Differentiated Services Code Point) value and a QCI (QoS Class Identifier). The DSCP value is information indicating the degree of priority assigned to an IP (Internet Protocol) header. Further, the QCI is information indicating the degree of priority for each bearer that is specified by 3GPP (Third Generation Partnership Project). Here, although two information indicating the degree of priority are used, only one information may be used.

The control unit 34 assigns the VNI and the policy for the use of the VNI to the base station device 10 and the L3 switch 20 based on the second correspondence information. By this operation, a plurality of virtual networks different for each service type of the data transmitted and received in the mobile communication system 2 are established. Further, although not shown in Fig. 4, when the mobile communication system 2 includes a plurality of base station devices 10, the control unit 34 assigns the VNI for each base station device 10 that transmits and receives the data. Therefore, the virtual network is established for each base station device 10.

More specifically, the policy assigned to the base station device that is identified by the ENB-ID of eNB#1 includes the following policies 1) to 3). Although not shown in Fig. 5, a correspondence relationship between the VNI value that is associated with eNB#1 and stored and the attribute value is assigned to this base station device as the policy.
1) When the DSCP value is best effort and the QCI is QCI#9, the virtual network identified by the VNI value of 1 is used.
2) When the DSCP value is AF (Assured Forwarding) #2 and the QCI is QCI#3, the virtual network identified by the VNI value of 2 is used.
3) When the DSCP value is EF (Expedited Forwarding) and the QCI is QCI#1, the virtual network identified by the VNI value of 100 is used.

Further, even in this exemplary embodiment, the control unit 34 can perform the route control based on the communication state detected by detection unit 32. At this time, the control unit 34 can perform the route control based on information indicating the degree of priority of the data included in the second correspondence information.

As explained above, by using the second exemplary embodiment, each communication device can transmit the data by using the virtual network different for each attribute value of the data. As a result, the sensitive service can be provided.

Further, in this exemplary embodiment, the correspondence information includes the information indicating the degree of priority of the data as the attribute value of the data. By this structure, the virtual network is established between the communication devices for each degree of priority of the data. Accordingly, each communication device can distinguish the data for each degree of priority of the data and thereby, can provide the more sensitive service.

### (Third exemplary embodiment)

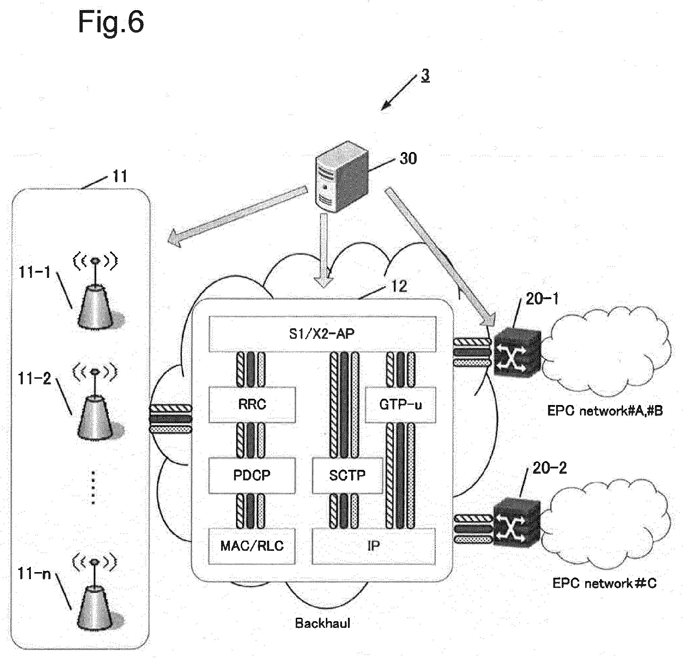

Fig. 6 is a figure showing a configuration of a mobile communication system 3 according to a third exemplary embodiment.

The mobile communication system 3 includes an antenna unit 11, a virtual base station function unit 12, and the L3 switches 20-1 and 20-2.

The antenna unit 11 includes a plurality of antenna devices 11-1 to 11-n.

The virtual base station function unit 12 is realized by a plurality of server devices virtually realized by the cooperation of a plurality of functions of the base station device. The function of the base station device includes for example, a MAC (Medium Access Control) layer function, an RLC (Radio Link Control) layer function, and a PDCP (Packet Data Convergence Protocol) layer function. Further, the function of the base station device includes an RRC (Radio Resource Control) layer function, an S1/X2-AP (Application Protocol) layer function, and an IP (Internet Protocol) layer function. Furthermore, the function of the base station device includes an SCTP (Stream Control Transmission Protocol) layer function and a GTP-u (GPRS Tunneling Protocol for User plane) layer function.

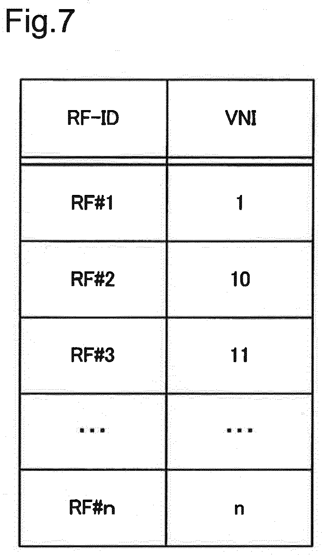

Fig. 7 to Fig. 9 are figures showing an example of the correspondence information used by the control device 30. In third correspondence information shown in Fig. 7, the VNI value is associated with an RF (Radio frequency)-ID for identifying the antenna device which transmits and receives the data as the attribute value of the data.

The control unit 34 assigns the VNI and the policy for the use of the VNI to each of the antenna unit 11 and the virtual base station function unit 12 by using the third correspondence information.

Specifically, the control unit 34 assigns the VNI associated with the RF-ID for identifying each of the antenna devices 11-1 to 11-n to each of the antenna devices 11-1 to 11-n of the antenna unit 11. The control unit 34 assigns the policy indicating that the assigned VNI is used for the data transmitted from the antenna devices 11-1 to 11-n to each of the antenna devices 11-1 to 11-n.

Further, the control unit 34 assigns all the VNIs included in the third correspondence information to the server device which realizes a function to receive the data from the antenna unit 11 among a plurality of the server devices which realize the virtual base station function unit 12. The control unit 34 assigns the information of the RF-ID associated with each VNI to the server device as the policy. As a result, the virtual network is established between each of the antenna devices 11-1 to 11-n and the virtual base station function unit 12. The virtual base station function unit 12 can distinguish the reception data that should be transmitted/received to/from the antenna device among the antenna devices 11-1 to 11-n.

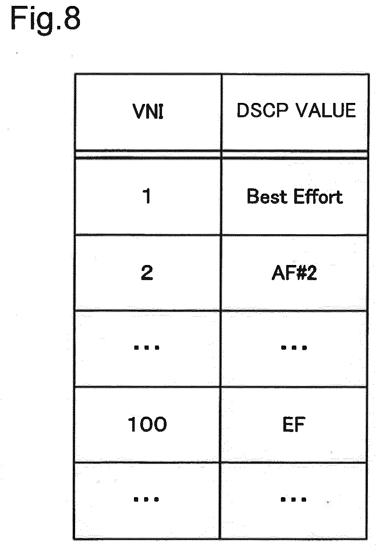

In fourth correspondence information shown in Fig. 8, the VNI value is associated with the information indicating the service type of the data as the attribute value of the data. The information indicating the service type indicates the degree of priority of the data. Specifically, the DSCP value is used for information indicating the degree of priority of the data.

The control unit 34 assigns the VNI and the policy for the use of the VNI to each of a plurality of the server devices which realize the virtual base station function unit 12 by using the fourth correspondence information. Specifically, the control unit 34 assigns all the VNIs included in the fourth correspondence information to each server device and assigns the DSCP value associated with these VNIs as the policy for the use of the VNI. As a result, the virtual network is established between a plurality of the virtual base station function units 12 for each service type of the data. Accordingly, the virtual base station function unit 12 can distinguish the service type of the data.

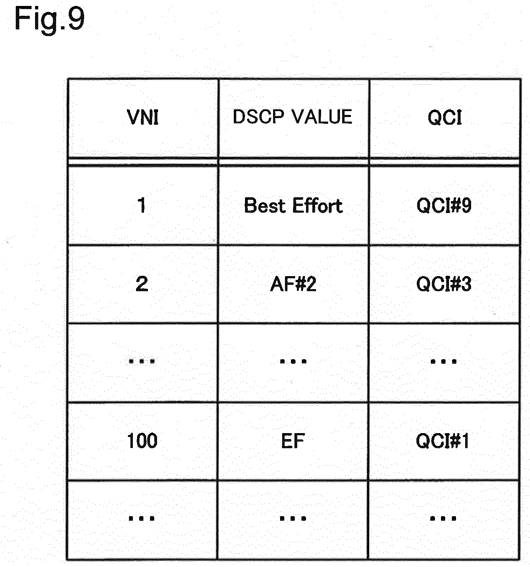

In fifth correspondence information shown in Fig. 9, the VNI value is associated with information indicating the service type of the data as the attribute value of the data. The information indicating the service type of the data indicates the degree of priority of the data. Specifically, the DSCP value and the QCI are used for information indicating the degree of priority of the data.

The control unit 34 assigns the VNI and the policy for the use of the VNI to the virtual base station function unit 12 and the L3 switches 20-1 and 20-2 by using the fifth correspondence information. As a result, the virtual network is established between the virtual base station function unit 12 and each of the L3 switches 20-1 and 20-2 for each service type of the data. Accordingly, the virtual base station function unit 12 and the L3 switches 20-1 and 20-2 can distinguish the service type of each data.

Further, the control unit 34 determines the correspondence information used for the assignment of the VNI based on the rule determined for each communication device in advance. For example, a rule indicating that the third correspondence information is used for the antenna unit 11 is determined in advance. Further, a rule indicating that the third correspondence information is used for the communication with the antenna unit 11, the fourth correspondence information is used for the communication with another server device, and the fifth correspondence information is used for the communication with the L3 switches 20-1 and 20-2 is determined for the server device which realizes the virtual base station function unit 12. Further, a rule indicating that the fifth correspondence information is used is determined for the L3 switches 20-1 and 20-2.

As described above, even in the third exemplary embodiment, the virtual network different for each attribute value of the data is established like the first exemplary embodiment and the second exemplary embodiment. Therefore, each communication device can provide the sensitive service. Further, each communication device can optimize the communication state of the communication system composed of the communication device.

Further, in the above-mentioned exemplary embodiment, a plurality of the communication devices include a plurality of server devices virtually realized by the cooperation of a function of the base station. By this configuration, because the control unit 34 assigns the identifier to each of a plurality of the server devices, a plurality of virtual networks are established between a plurality of the server devices which realize the function of the base station for each attribute value of the data. Therefore, each server device can distinguish the data for each attribute value of the data and thereby, can provide the more sensitive service.

Further, in the above-mentioned exemplary embodiment, a plurality of the communication devices further include antenna devices 11-1 to 11-n. By this configuration, the control unit 34 assigns the identifier to each of the antenna devices 11-1 to 11-n and the server device and a plurality of the virtual networks are established between the antenna devices 11-1 to 11-n and the server device for each attribute value of the data. Accordingly, each of the antenna devices 11-1 to 11-n and the server device can distinguish the data for each attribute value of the data and thereby, can provide the more sensitive service.

Further, in the above-mentioned exemplary embodiment, a plurality of the communication devices include the L3 switches 20-1 and 20-2 that are relay devices which perform relay between a physical network and another physical network. By this configuration, a plurality of the virtual networks are established between the L3 switches 20-1 and 20-2 and another communication device for each attribute value of the data. Accordingly, each of the L3 switches 20-1 and 20-2 and the communication device can distinguish the data for each attribute value of the data and thereby, can provide the more sensitive service.

### (Modification example)

The invention of the present application has been described above with reference to the exemplary embodiment. However, the invention of the present application is not limited to the above mentioned exemplary embodiment. Various changes in the configuration or details of the invention of the present application that can be understood by those skilled in the art can be made without departing from the scope of the invention of the present application.

For example, in the above-mentioned exemplary embodiment, the virtual networks are established in one L2 network. However, the present invention is not limited to this example. For example, the virtual network may be established outside the L3 switches 20-1 and 20-2 over a plurality of the L2 networks.

Further, in the above-mentioned exemplary embodiment, the storage unit 33 of the control device 30 stores the correspondence information in advance. However, the present invention is not limited to this example. The control device 30 may acquire the correspondence information from an external server device via the communication unit 31 and store the acquired correspondence information to the storage unit 33. Further, the control device 30 may generate the correspondence information according to the operation of the administrator of the mobile communication systems 1 to 3 and store it to the storage unit 33.

Further, in the third exemplary embodiment described above, the control unit 34 assigns the VNI between the antenna unit 11 and the virtual base station function unit 12, the VNI inside the virtual base station function unit 12, and the VNI between the virtual base station function unit 12 and the L3 switches 20-1 and 20-2 by using the different correspondence information from each other. However, the present invention is not limited to this example. When the VNI between the antenna unit 11 and the virtual base station function unit 12, the VNI inside the virtual base station function unit 12, and the VNI between the virtual base station function unit 12 and the L3 switches 20-1 and 20-2 are assigned, the common correspondence information may be used for a part of or all of them. When the common correspondence information is not used, the data can be more finely distinguished and processed. Further, when the common correspondence information is used, the correspondence information can be easily managed.

Further, in the third exemplary embodiment described above, the control unit 34 assigns the VNI between the antenna unit 11 and the virtual base station function unit 12 for each of the antenna devices 11-1 to 11-n. The control unit 34 assigns the VNI inside the virtual base station function unit 12 and the VNI between the virtual base station function unit 12 and the L3 switches 20-1 and 20-2 for each service type of the data. However, the present invention is not limited to this example. The VNI can be assigned to any part related to the attribute value of the data.

Further, a part of or all of the above-mentioned exemplary embodiment can be described as the following supplementary note. However, the present invention is not limited to the following supplementary note.

### [Supplementary note 1]

A control device comprising:
a storage unit configured to store correspondence information in which each of a plurality of identifiers for identifying a corresponding one of a plurality of virtual networks at a network layer level is associated with an attribute value of data to be transmitted by the virtual network identified by the identifier; and
a control unit configured to assign, based on the correspondence information, the identifier and a policy for use of the virtual network identified by the identifier to each of a plurality of communication devices connected via a physical network.

### [Supplementary note 2]

The control device according to supplementary note 1, further comprising:
a detection unit configured to detect a state of each virtual network and
wherein the control unit performs a route control of each virtual network based on the state detected by the detection unit.

### [Supplementary note 3]

The control device according to supplementary note 1 or supplementary note 2,
wherein the correspondence information includes information indicating at least one of a destination of the data, a transmission source, and a degree of priority as the attribute value of data.

### [Supplementary note 4]

The control device according to any one of supplementary notes 1 to 3,
wherein the correspondence information is one of a plurality of types of correspondence information, and
the control unit assigns the identifier and the policy to each communication device based on one of the plurality of types of correspondence information which satisfies a rule, the rule being determined in advance for each of the plurality of communication devices.

### [Supplementary note 5]

The control device according to any one of supplementary notes 1 to 4,
wherein the plurality of communication devices includes a plurality of server devices that cooperate with each other and implement virtually a function of base station.

### [Supplementary note 6]

The control device according to supplementary note 5,
wherein each of the plurality of communication devices includes an antenna device.

### [Supplementary note 7]

The control device according to any one of supplementary notes 1 to 6,
wherein the plurality of the communication devices includes a relay device configured to perform relay between the physical network and another physical network.

### [Supplementary note 8]

A control method comprising:
storing a correspondence information in which each of a plurality of identifiers for identifying a corresponding one of a plurality of virtual networks at a network layer level is associated with an attribute value of data to be transmitted by the virtual network identified by the identifier to a storage unit, and
reading out the correspondence information from the storage unit; and
assigning, based on the correspondence information read out from the storage unit, the identifier and a policy for use of the virtual network identified by the identifier to each of a plurality of communication devices connected via a physical network.

This application claims priority based on Japanese Patent Application No. 2014-157368 filed on August 1st, 2014, the disclosure of which is hereby incorporated by reference in its entirety.

### Reference signs List

- 1, 2, 3: mobile communication system
- 10-1 to 10-n: base station device
- 11-1 to 11-n: antenna device
- 12: virtual base station function unit
- 20-1 and 20-2: L3 switch (relay device)
- 30: control device
- 31: communication unit
- 32: detection unit
- 33: storage unit
- 34: control unit

## Claims

1. A control device comprising:
a storage unit configured to store correspondence information in which each of a plurality of identifiers for identifying a corresponding one of a plurality of virtual networks at a network layer level is associated with an attribute value of data to be transmitted by the virtual network identified by the identifier; and
a control unit configured to assign, based on the correspondence information, the identifier and a policy for use of the virtual network identified by the identifier to each of a plurality of communication devices connected via a physical network.

2. The control device according to claim 1, further comprising:
a detection unit configured to detect a state of each virtual network and
wherein the control unit performs a route control of each virtual network based on the state detected by the detection unit.

3. The control device according to claim 1 or claim 2,
wherein the correspondence information includes information indicating at least one of a destination of the data, a transmission source, and a degree of priority as the attribute value of data.

4. The control device according to any one of claims 1 to 3,
wherein the correspondence information is one of a plurality of types of correspondence information, and
the control unit assigns the identifier and the policy to each communication device based on one of the plurality of types of correspondence information which satisfies a rule, the rule being determined in advance for each of the plurality of communication devices.

5. The control device according to any one of claims 1 to 4,
wherein the plurality of communication devices includes a plurality of server devices that cooperate with each other and implement virtually a function of base station.

6. The control device according to claim 5,
wherein each of the plurality of communication devices includes an antenna device.

7. The control device according to any one of claims 1 to 6,
wherein the plurality of the communication devices includes a relay device configured to perform relay between the physical network and another physical network.

8. A control method comprising:
reading out a correspondence information from a storage unit that stores correspondence information in which each of a plurality of identifiers for identifying a corresponding one of a plurality of virtual networks at a network layer level is associated with an attribute value of data to be transmitted by the virtual network identified by the identifier, and
assigning, based on the correspondence information read out from the storage unit, the identifier and a policy for use of the virtual network identified by the identifier to each of a plurality of communication devices connected via a physical network.
